# EUROPÄISCHE PATENTSCHRIFT

(11) **EP 0 528 235 B1**
(45) Veröffentlichungstag und Bekanntmachung des Hinweises auf die Patenterteilung: **25.10.1995**
(21) Anmeldenummer: 92113079.5
(22) Anmeldetag: 31.07.1992
(51) Int. Cl.: A61G 5/04, A61G 5/02, B60K 7/00

(54) **Kleinfahrzeug, insbesondere Rollstuhl mit faltbarem Stuhlgestell**
Small-sized vehicle, in particular wheel chair with foldable chair frame
Véhicule de faible encoulement, en particulier chaise roulante avec cadre de chaise pliable

(30) Priorität: 17.08.1991 DE 4127257
(43) Veröffentlichungstag der Anmeldung: 24.02.1993
(73) Patentinhaber: Ulrich Alber GmbH, D-72458 Albstadt (DE)
(72) Erfinder: Alber, Ulrich, W-7470 Albstadt-Laufen (DE)
(74) Vertreter: Möbus, Rudolf, Dipl.-Ing.

(56) Entgegenhaltungen:
- EP-A- 0 252 322
- EP-A- 0 463 168
- WO-A-91/01897
- GB-A- 1 363 649
- GB-A- 2 210 589
- US-A- 4 961 473

## Beschreibung

Die Erfindung betrifft ein Kleinfahrzeug, insbesondere eine Rollstuhl mit einem Stuhlgestell mit mindestens zwei Laufrädern, die jeweils mittels eines im Bereich ihrer Nabe angeordneten Gleichstrommotors mit Getriebe antreibbar sind.

Elektromotorisch betriebene und mit nachladbaren Batterien versehene Kleinfahrzeuge sind bekannt, auch elektromotorisch betriebene Rollstühle.

Elektromotorisch betriebene Rollstühle haben den Nachteil, daß sie im Gegensatz zu handbetriebenen Rollstühlen bisher nicht in eine Form gebracht werden konnten, die ihren Transport im Kofferraum eines normalen Personenkraftfahrzeuges erlauben. Zwar ist vom WO 91/01897 ein elektromotorisch betriebener Rollstuhl bekannt, bei welchem die Antriebsmotoren als Radnabenmotoren ausgebildet sind. Dadurch wird aber nur erreicht, daß in einem nicht zusammenfaltbaren Stuhlgestell mehr Platz für die Anordnung der Batterien anfällt. Die Radnabenmotoren stehen aus der Laufradebene zum Stuhlgestell hin über und erfordern ein besonderes, fest am Stuhlgestell verankertes Lagerungsgestell für die Laufräder. Werden die Elektromotoren für den Handbetrieb der Laufräder ausgekuppelt, muß der Rollstuhlfahrer einen Teil des Antriebsgetriebes mitbewegen, weil die Kupplung innerhalb des verwendeten Getriebes ausgebildet ist.

Der Erfindung liegt die Aufgabe zugrunde, ein elektromotorisch betriebenes Kleinfahrzeug, insbesondere einen elektromotorisch betriebenen Rollstuhl, mit Nabenmotoren so auszubilden, daß das Fahrzeug, inbesondere der Rollstuhl, zum Transport leicht in Einzelteile zerlegbar ist.

Die gestellte Aufgabe wird mit einem Kleinfahrzeug der eingangs genannten Art erfindungsgemäß dadurch gelöst, daß die Laufräder als mit einer an dem Gestell lösbar verankerbaren Steckachse versehene, abnehmbare Räder ausgebildet sind, daß jeder Gleichstrommotor einschließlich seines Getriebes ohne Überstand innerhalb der antreibbaren Radnabe angeordnet ist und daß der Stator jedes Gleichstrommotors über ein Stützteil lösbar am Gestell, insbesondere einem faltbaren Rollstuhlgestell, verankerbar ist.

Das erfindungsgemäß ausgebildete Kleinfahrzeug hat den Vorteil, daß seine Laufräder zusammen mit ihrem Antriebsmotor mit einem einfachen Handgriff von dem Fahrzeuggestell abgenommen werden können, wie dies von motorlosen, faltbaren Rollstühlen her bekannt ist. Das Fahrzeuggestell, insbesondere ein Rollstuhlgestell, bleibt dementsprechend auch von den Antriebsmotoren seiner Laufräder unbelastet, so daß es faltbar gestaltet werden kann, wie dies von motorlosen Rollstühlen her bekannt ist. Mit der Erfindung lassen sich daher auch handelsübliche motorlose Rollstühle mit zusammenfaltbarem Stuhlgestell nachträglich für einen elektromotorischen Antrieb nachrüsten. Für die Aufnahme der Batterien kann ein Gestellzusatz vorgesehen werden, der mindestens weitgehend an den abnehmbaren Laufrädern abstützbar und für den Transport des Rollstuhles abnehmbar ist. Die Gestellkonstruktion und der freie Gestellraum bleiben durch die Nabenmotoren unbeeinflußt, weil die Motoren keinen Überstand über die Laufradebene haben. Am Gestell muß lediglich eine Befestigungsstelle für ein Stützteil ausgebildet werden, mit welchem der Stator jedes Gleichstrommotors drehfest abgestützt wird. Die elektrische Stromversorgung und Steuerung der beiden Nabenmotoren kann zweckmäßig jeweils über eine am Stützteil für den Motorstator angeordnete lösbare Steckverbindung für die elektrischen Leitungen erfolgen.

Die Antriebsmotoren können vorteilhafterweise als mehrpolige, elektronisch kommutierte, bürstenlose Gleichstrommotoren mit einem Permanentmagnetläufer, und die nachgeschalteten Getriebe können als Planetenradgetriebe ausgebildet sein. Dadurch läßt sich eine kompakte, raumsparende und relativ gewichtsarme Antriebseinheit ausbilden, die den zusätzlichen Vorteil erbringt, daß der kommutierte Gleichstrommotor einen größeren Wirkungsgrad als ein üblicher Gleichstromnebenschlußmotor aufweist und dadurch der Stromverbrauch aus den Batterien vermindert werden kann. Die Laufräder mit dem integrierten Antriebsteil lassen sich dadurch mit einem Gewicht herstellen, das auch einer Frau das Ein- und Ausladen dieser Laufräder in einen und aus einem Personenkraftwagen erlaubt. Der kommutierte Gleichstrommotor hat außerdem den Vorteil, daß er bei Fahrten bergab als Generator wirken und Strom zurück in die Batterie liefern kann. Die Steuereinrichtung für den Elektroantrieb kann erfindungsgemäß in einen am Fahrzeuggestell angeordneten Masterprozessor mit dem Bedienungsteil für den Fahrer und in zwei nachgeordnete Motorprozessorteile gegliedert sein, die mindestens teilweise motornahe in den Laufradnaben untergebracht, also in den Antriebsteil integriert sind. Dadurch erübrigen sich viele Steuerleitungen, und es ergibt sich eine übersichtliche, reparaturfreundliche Gliederung der Teile, was auch die wichtige Betriebssicherheit eines elektromotorisch betriebenen Rollstuhles erhöht.

Bei dem erfindungsgemäß ausgebildeten Kleinfahrzeug kann vorteilhafterweise eine vom Fahrzeugbenutzer, also auch von einem Rollstuhlbenutzer, betätigbare Kupplung zwischen dem Getriebe der Nabenmotoren und der Nabe angeordnet sein, so daß bei gelöster Kupplung keine Teile der in den Laufrädern untergebrachten Getriebe mitbewegt werden müssen. Zweckmäßig kann die Kupplung eine mit einem Planetenträger des Planetenradgetriebes verbundene Zahnscheibe aufweisen, in welche in der Radnabe verstellbar gelagerte Mitnehmer einrastbar sind, die mittels eines an der Nabenaußenseite gelagerten, dem Fahrzeugbenutzer leicht zugänglichen Schaltringes ausrastbar sind. Die Mitnehmer der Kupplung können als zweiarmige, in der Radnabe gelagerte Schwenkhebel ausgebildet sein, die an ihrem einen freien Ende einen mit der Zahnscheibe zusammenwirkenden Kupplungsrastvorsprung aufweisen und mit ihrem anderen freien Ende mit an dem konzentrisch auf der Nabe gelagerten Schaltring ausgebildeten Steuerflächen zusammenwirken.

Nachfolgend wird ein Ausführungsbeispiel eines Nabenmotors für einen erfindungsgemäß ausgebildeten Rollstuhl anhand der beiliegenden Zeichnung näher erläutert.

Im einzelnen zeigen:
- Fig. 1: einen zentralen Längsschnitt durch die Nabe eines Laufrades für einen Rollstuhl mit dem eingebauten Antriebsteil;
- Fig. 2 und 3: einen Schnitt durch die Antriebskupplung entlang der Linie II/III-II/III in Fig. 1, einmal bei geschlossener und einmal bei gelöster Kupplung;
- Fig. 4: ein Blockschaltbild von der elektrischen Steuereinrichtung des Rollstuhls;
- Fig. 5: einen der Fig. 1 entsprechenden Längsschnitt durch ein zusätzlich mit einer Bremsvorrichtung versehenes Ausführungsbeispiel.

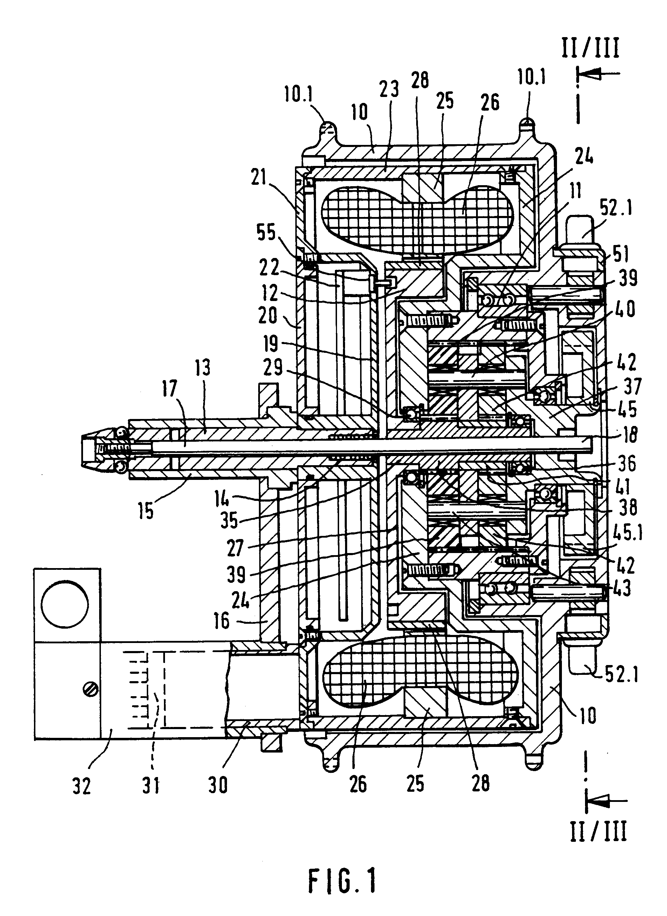

Der zentrale Längsschnitt der Fig. 1 zeigt den kompakten Aufbau des aus Elektromotor, Planetenradgetriebe und einer Kupplung bestehenden Antriebsteils für ein großes Laufrad eines Rollstuhles. Alle Teile sind innerhalb einer topfartig ausgebildeten Radnabe 10 angeordnet, die über ein Kugellager 11 auf einem Zahnkranzträger 12 eines Planetenradgetriebes gelagert ist. Der stationäre Teil der Antriebsvorrichtung umfaßt eine konzentrische Steckachse 13, die in einer Buchse 14 gehaltert ist und die in eine Adapterhülse 15 einsteckbar ist, die zusammen mit einer Anschlagwandung 16 am nicht dargestellten Rollstuhl befestigt ist. Die Steckachse 13 ist mittels eines von Steckrädern her bekannten Kugelsperrbolzens 17, der über einen durch das Nabengehäuse hindurchführenden Bedienungsstift 18 längsverstellbar ist, aus der Adapterhülse 15 ausrastbar. An der Nabe 10 sind Ringstege 10.1 mit Bohrungen zur Verankerung von nicht dargestellten Speichen des Laufrades ausgebildet.

Die stationäre Buchse 14 bildet das Zentrum einer Gehäusewanne 19, die durch einen Deckel 20 dicht verschließbar ist und einen äußeren Ringflansch 21 aufweist. Innerhalb der Gehäusewanne ist eine Leiterplatte 22 mit Teilen einer noch zu erwähnenden Steuerschaltung geschützt angeordnet.

Mit dem äußeren Ringflansch 21 der Gehäusewanne 19 ist eine in die Radnabe 10 mit geringem Abstand hineinragende Ringwandung 23 verbunden, die Teil eines Schutzgehäuses für den elektrischen Antriebsmotor ist und mit einem stationär gehaltenen Motortragkörper 24 lösbar verbunden ist. An der Ringwandung 23 ist ein ringförmiger Statorträger 25 für die aus einzelnen Polwicklungen zusammengesetzte Statorwicklung 26 befestigt. Der scheibenförmige Läufer 27 des Gleichstrommotors ist an seinem verbreiterten Außenrand mit Permanentmagneten 28 besetzt und über ein Kugellager 29 in dem Motortragkörper 24 gelagert, der gleichzeitig auch als Tragkörper für Teile des Planetenradgetriebes, so für den Zahnkranzträger 12, dient.

An dem Außenringflansch 21 des Wannengehäuses 19 ist an einer Umfangsstelle ein Steckrohr 30 befestigt, das beim Einstecken des Laufrades ebenfalls in eine am Rollstuhlgestell befestigte Adapterhülse 32 einsteckbar ist. Über das Steckrohr 30 werden die stationären Teile der Antriebsvorrichtung am Rollstuhlgestell abgestützt. Außerdem führen durch dieses Rohr in nicht dargestellter Weise die Verbindungsleitungen zur Statorwicklung 26 des Gleichstrommotors und zu der Leiterplatine 22 bis zu einem am Ende des Steckrohres 30 ausgebildeten elektrischen Steckkörper mit mehreren Steckern, der mit einer in der Adapterhülse 32 angeordneten, nicht dargestellten passenden Steckdose zusammenwirkt.

Der Läufer 27 des Gleichstrommotors ist mit einer Hohlwelle 35 verbunden, die über ein Kugellager 36 in einem Planetenradträger 37 für eine zweite Planetenradstufe gelagert ist. Auf der Hohlwelle 35 ist ein Sonnenrad 38 für eine erste Stufe des Planetenradgetriebes ausgebildet, das mit auf Lagerzapfen 40 angeordneten Planetenrädern 39 der ersten Stufe in Eingriff steht. Ein Sonnenrad 41 für die zweite Stufe des Planetenradgetriebes ist als Hohlrad konzentrisch auf der Hohlwelle 35 angeordnet und steht mit Planetenrädern 42 der zweiten Stufe in Eingriff, die auf Lagerzapfen 43 angeordnet sind. Die Lagerzapfen 43 für die Planetenräder 42 des zweiten Satzes sind in dem Planetenradträger 37 befestigt. Alle Planetenräder 39 und 42 kämmen mit Innenzahnkränzen des stationären Zahnkranzträgers 12.

Über das zweistufige Planetenradgetriebe wird das vom Läufer 27 des Gleichstrommotors gelieferte Drehmoment auf den kugelgelagerten Planetenradträger 37 übertragen und von dort aus über eine Kupplung auf die Nabe 10.

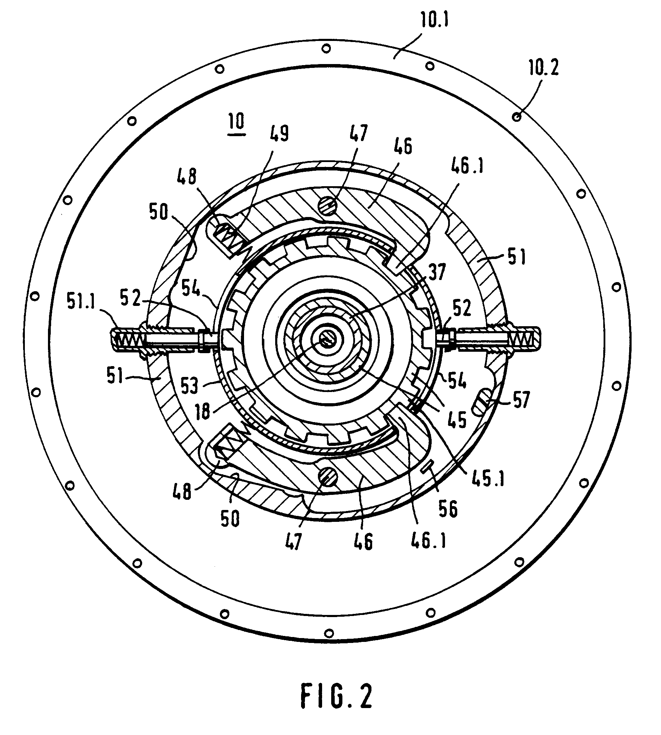

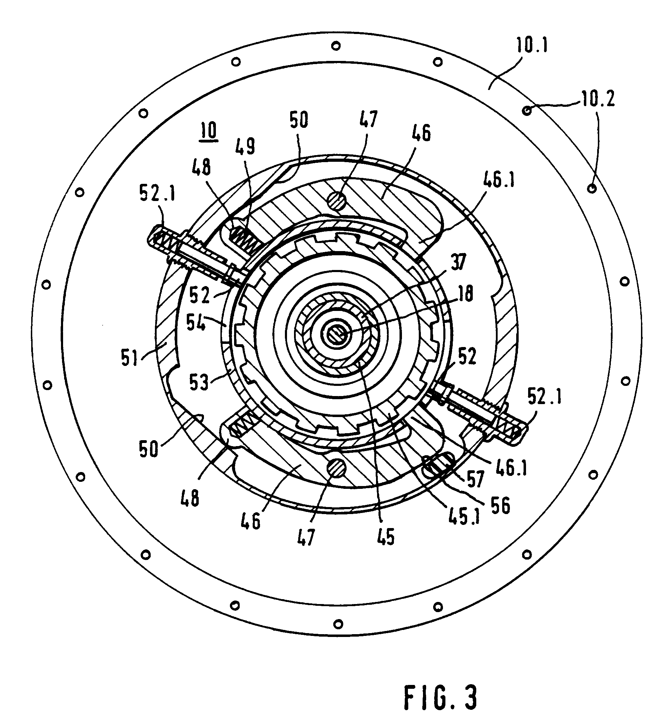

Die Kupplung, die im einzelnen aus den beiden Fig. 2 und 3 in Draufsicht ihrer Teile ersichtlich ist, besteht aus einer mit dem Planetenradträger 37 fest verbundenen Mitnehmer-Zahnscheibe 45, zwischen deren Zähne 45.1 Zähne 46.1 von Kupplungsmitnehmern 46 einrasten können. Es sind zwei Kupplungsmitnehmer vorgesehen, die als zweiarmige, um in der Nabe 10 verankerte Lagerzapfen 47 verschwenkbare doppelarmige Hebel ausgebildet sind. Die Mitnehmerzähne 46.1 befinden sich am freien Ende des einen Hebelarmes. Der andere Hebelarm ist an seinem freien Ende mit einem Gleitnocken 48 versehen. An dieser Stelle greift am Kupplungsmitnehmer 46 auch eine Druckfeder 49 an, mit welcher die Kupplungsmitnehmer 46 in ihre aus Fig. 2 ersichtliche Einraststellung vorgespannt sind. Die Gleitnocken 48 der Kupplungsmitnehmer 46 wirken mit schrägen Steuerflächen 50 zusammen, die an einem auf der Außenseite der Nabe 10 konzentrisch angeordneten Schaltring 51 innenseitig ausgebildet sind. Durch eine Relativdrehung des Schaltringes 51, die durch Anschläge 52 begrenzt ist, erzwingen die schrägen Steuerflächen 50 des Schaltringes ein Verschwenken der Kupplungsmitnehmer 46 in die aus Fig. 3 ersichtliche Lösestellung, in welcher die Rastzähne 46.1 aus der Mitnehmer-Zahnscheibe ausgerastet sind und damit die Antriebsverbindung zwischen dem motorseitigen Planetenradträger 37 und der Nabe 10 des Laufrades unterbrochen ist. In diesem ausgekuppelten Zustand kann das Laufrad von einem Rollstuhlfahrer von Hand angetrieben werden, ohne daß dabei ein Teil des Planetenradgetriebes vom Rollstuhlfahrer mitbewegt werden muß.

Die Vorspannfedern 49 für die Kupplungsmitnehmer 46 sind an einem Ringflansch 53 abgestützt, in welchem Schlitze 54 für die mit außenliegenden Schraubköpfen 52.1 versehenen Anschläge 52 des Schaltrades 51 ausgebildet sind. Der Ringflansch 53 weist auch Führungsöffnungen für die Rastzähne 46.1 der Kupplungsmitnehmer 46 auf. Um sicherzustellen, daß der elektrische Antrieb des Rollstuhls nur betriebsbereit ist, wenn beide Räder eingekuppelt sind, ist in jeder Radnabe ein Sicherungsschalter eines Sicherungskreises der Steuereinrichtung angeordnet. Bei dem dargestellten Ausführungsbeispiel besteht dieser Schalter aus einer Kontaktzunge 56, die in eingekuppeltem Zustand der Räder gemäß Fig. 2 freiliegt, von einem ausgekuppelten Mitnehmer 46 aber von diesem Mitnehmer beaufschlagt und durch einen elastischen Gegendruckkörper 57 in seiner Kontaktlage an dem Mitnehmer 46 gehalten ist. Den Gegenkontakt bildet hierbei der Mitnehmer 46, er könnte aber auch in dem Körper 57 ausgebildet sein.

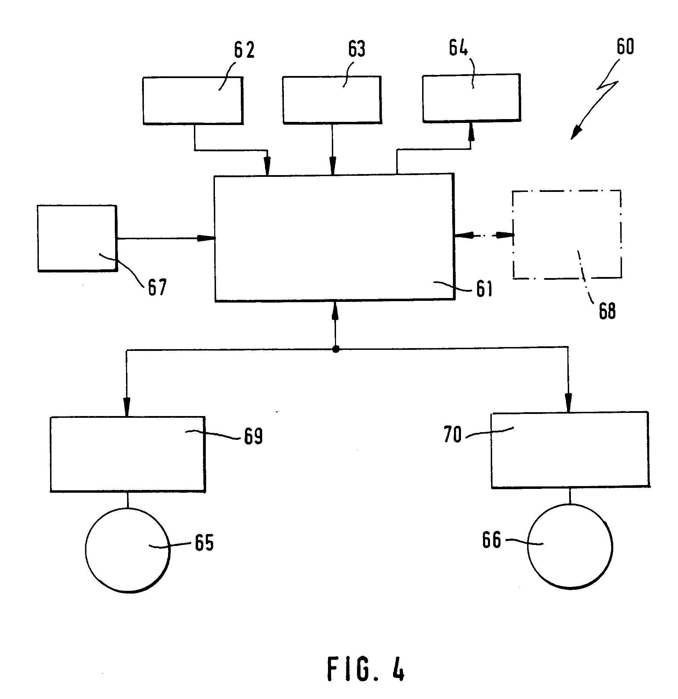

Auf der aus Fig. 1 ersichtlichen elektrischen Schaltungsplatine 22 die in der Gehäusewanne 19 angeordnet ist, sind sog. Hall-Generatoren 55 als elektromagnetisch wirkende Steuersonden so angeordnet, daß sie durch die Wannengehäusewandung hindurch bis in den Einflußbereich der Permanentmagnete 28 des Läufers 27 des Gleichstrommotors ragen. Die elektrische Steuerschaltung 60 für den Rollstuhlantrieb ist in Fig. 4 im Blockschaltbild dargestellt. Sie besteht aus einem Masterprozessor 61, der im Rollstuhlgestell an passender Stelle angeordnet ist und mit welchem ein Bedienungsbord mit einem Hauptschalter 62, einem Kreuz-Steuerknüppel 63 und einer Anzeigeeinrichtung 64 verbunden ist und über welchen auch die Stromversorgung der beiden Elektromotoren 65, 66 der beiden großen Laufräder des Rollstuhles aus einem Akkumulator 67 gesteuert wird. Über den Masterprozessor 61 wird auch das Aufladen der Akkumulatoren 67 an einem mit gestrichelten Linien dargestellten Ladeterminal 68 gesteuert. Dem Masterprozessor sind zwei Motorprozessoren 69 und 70 für die beiden Antriebsmotoren 65 und 66 nachgeschaltet. Diese Motorprozessoren 69 oder 70 sind mindestens teilweise auf der elektrischen Schalterplatte 22 ausgebildet und über den Stecker 31 der lösbaren Laufräder mit dem Masterprozessor 61 oder ebenfalls im Rollstuhlgestell untergebrachten anderen Teilen der Motorprozessoren 69 oder 70 verbunden. Die Hall-Generatoren 55 gehören zu dem zugeordneten Motorprozessor 69 oder 70 und dienen zur Steuerung der Kommutierung der mehrpoligen Statorwicklung 26 in Abhängigkeit von der augenblicklichen Stellung des Permanentmagnet-Läufers 27 des Gleichstrommotors 65 oder 66.

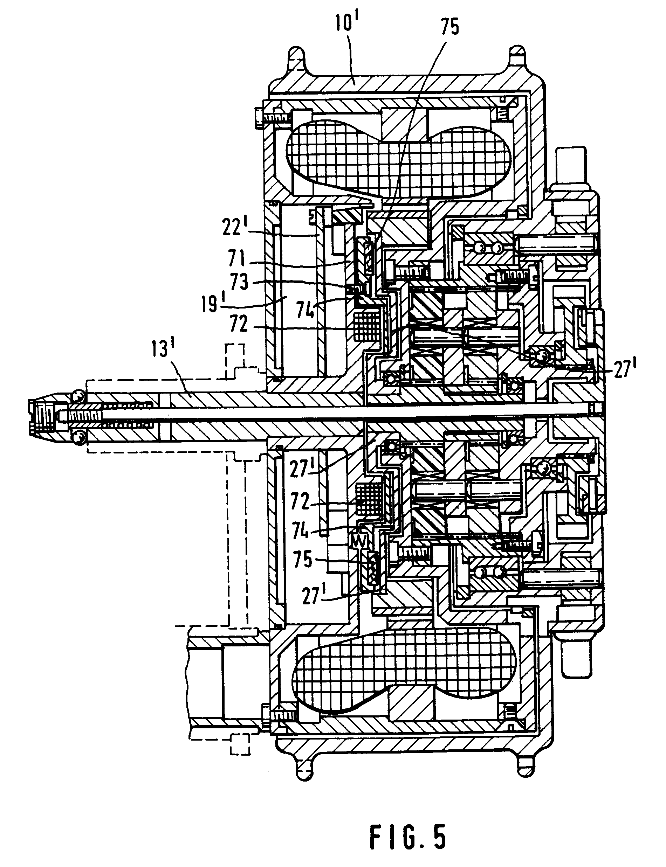

Fig. 5 zeigt einen Antriebsteil, in welchen eine elektromagnetische Federkraftbremse integriert ist. In der Figur sind die bereits im Zusammenhang mit der Fig. 1 beschriebenen Teile des Antriebsteiles nicht mehr bezeichnet. Für die bezeichneten Teile sind teilweise die gleichen Bezugsziffern, ergänzt durch einen Indexstrich, wie in Fig. 1 verwendet. Die elektromagnetische Federkraftbremse ist zwischen dem Läufer des Antriebsteiles und einer profilierten Bodenplatte 71 des zur Aufnahme einer elektronischen Ansteuerschaltung mit der Leiterplatte 22' bestimmten Wannengehäuses 19' angeordnet. In die Bodenplatte 71 ist symmetrisch zu der Steckachse 13' ein Bremsmagnetring 72 eingesetzt, der mit einem ebenfalls ringförmigen, profilierten, auf in der Grundplatte 71 verankerten Steckzapfen 73 geführten Bremsmagnetanker 74 einwirkt. Dieser ringförmige Bremsmagnetanker ist mit einem Bremsbelagring 75 besetzt, der auf den Läufer 27' einwirken kann. Der Läufer 27' ist abweichend von dem Läufer 27 nach Fig. 1 zur Anpassung an die Federkraftbremse profiliert.

## Patentansprüche

1. Kleinfahrzeug, insbesondere Rollstuhl, mit einem Gestell mit mindestens zwei Laufrädern, die jeweils mittels eines im Bereich ihrer Nabe angeordneten Gleichstrommotors mit Getriebe antreibbar sind, dadurch gekennzeichnet, daß die Laufräder als mit einer an dem Gestell lösbar verankerbaren Steckachse (13) versehene, abnehmbare Räder ausgebildet sind, daß jeder Gleichstrommotor (65, 66) einschließlich seines Getriebes (38 ff.) ohne Überstand innerhalb der antreibbaren Radnabe (10) angeordnet ist und daß der Stator (23-25) jedes Gleichstrommotors über ein Stützteil (30) lösbar am Gestell (Adapterhülse 32), insbesondere einem faltbaren Rollstuhlgestell, verankerbar ist.

2. Kleinfahrzeug nach Anspruch 1, dadurch gekennzeichnet, daß zwischen dem Getriebe der Nabenmotoren (65, 66) und der Nabe (10) eine vom Fahrzeugbenutzer betätigbare Kupplung (45/46) angeordnet ist.

3. Kleinfahrzeug nach Anspruch 1 oder 2, dadurch gekennzeichnet, daß die Stromversorgung und Steuerung der beiden Nabenmotoren jeweils über eine am Stützteil (30) für den Motorstator angeordnete lösbare Steckverbindung (31) für die elektrischen Leitungen erfolgt.

4. Kleinfahrzeug nach einem der Ansprüche 1 bis 3, dadurch gekennzeichnet, daß die Antriebsmotoren mehrpolige, elektronisch kommutierte Gleichstrommotoren mit einem Permanentmagnetläufer (27) sind und die nachgeschalteten Getriebe als Planetenradgetriebe ausgebildet sind.

5. Kleinfahrzeug nach einem der Ansprüche 1 bis 4, dadurch gekennzeichnet, daß die Kupplung eine mit einem Planetenradträger (37) des Planetenradgetriebes verbundene Zahnscheibe (45) aufweist, in welche in der Radnabe (10) verstellbar gelagerte Mitnehmer (46) einrastbar sind, die mittels eines an der Nabenaußenseite gelagerten, dem Fahrzeugbenutzer zugänglichen Schaltringes (51) ausrastbar sind.

6. Kleinfahrzeug nach Anspruch 5, dadurch gekennzeichnet, daß die Mitnehmer (46) der Kupplung als zweiarmige, in der Radnabe (10) gelagerte Schwenkhebel ausgebildet sind, die an ihrem einen freien Ende einen mit der Zahnscheibe (45) zusammenwirkenden Rastvorsprung (46.1) aufweisen.

7. Kleinfahrzeug nach Anspruch 5 oder 6, dadurch gekennzeichnet, daß mindestens einer der Kupplungsmitnehmer (46) in einer seiner Betriebsstellungen auf einen elektrischen Sicherungskontakt (56) einwirkt.

8. Kleinfahrzeug nach einem der Ansprüche 1 bis 7, dadurch gekennzeichnet, daß ein Ansteuerelektronikteil (22) in einer allseitig verschließbaren Kammer (Wannengehäuse 19) des Stators des Gleichstrommotors untergebracht ist, wobei in einer dem Rotor (27) des Gleichstrommotors zugewandten Kammerwandung ein Durchbruch für mindestens eine durch die Permanentmagnete (28) des Rotors beeinflußbare Steuersonde (55) vorgesehen ist.

9. Kleinfahrzeug nach einem der Ansprüche 1 bis 8, dadurch gekennzeichnet, daß die Steuereinrichtung (60) für den Elektroantrieb gegliedert ist in einen am Gestell angeordneten Masterprozessor (61) und in einen nachgeordneten Motorprozessor (69, 70) für jeden Antriebsmotor (65, 66), wobei die Motorprozessoren (69, 70) mindestens teilweise in den Radnaben (10) motornahe untergebracht sind.

10. Kleinfahrzeug nach einem der Ansprüche 1 bis 9, dadurch gekennzeichnet, daß in der Nabe zwischen der Kammer (19') für den Ansteuerelektronikteil (22') und dem Läufer (27') eine elektromagnetische Federkraftbremse (Teile 72-75) konzentrisch angeordnet ist.

## Claims

1. A small vehicle, particularly a wheelchair, having a frame with at least two running wheels which can each be driven by means of a DC motor with a transmission disposed in the region of their hubs, characterised in that the running wheels are constructed as removable wheels provided with an insertable axle (13) which can be detachably anchored on the frame, that each DC motor (65, 66) including its transmission (38, etc.) is disposed inside the driven hub (10) without an overhang and that the stator (23-25) of each DC motor can be detachably anchored via a supporting part (30) on the frame (adapter sleeve 32), particularly on a folding wheelchair frame.

2. A small vehicle according to claim 1, characterised in that a clutch (45/46) which can be operated by the vehicle user is disposed between the transmission of the hub motors (65, 66) and the hub (10).

3. A small vehicle according to claim 1 or 2, characterised in that the power supply and the control of both hub motors are each effected via a detachable plug-in connection (31) for the electrical leads disposed on the supporting part (30) for the motor stator.

4. A small vehicle according to any one of claims 1 to 3, characterised in that the drive motors are multipolar, electronically commutated DC motors having a permanent magnet rotor (27), and the transmissions connected downstream are constructed as planet wheel gears.

5. A small vehicle according to any one of claims 1 to 4, characterised in that the clutch comprises a toothed disc (45) attached to a planet carrier (37) of the planet wheel gear, wherein drivers (46) which are adjustably mounted in the wheel hub (10) can be locked into the toothed disc, which drivers can be unlocked by means of a selector ring (51) mounted on the outside of the hub and accessible to the vehicle user.

6. A small vehicle according to claim 5, characterised in that the drivers (46) of the clutch are constructed as two-armed swivelling levers which are mounted in the wheel hub (10) and which have a locking projection (46.1) at one of their free ends, which locking projection cooperates with the toothed disc (45).

7. A small vehicle according to claim 5 or 6, characterised in that at least one of the clutch drivers (46) acts on an electrical safety contact (56) in one of its operating positions.

8. A small vehicle according to any one of claims 1 to 7, characterised in that a triggering electronics component (22) is housed in a chamber (trough housing 19) of the stator of the DC motor, which chamber can be sealed on all sides, wherein an opening for at least one control sensor (55) which can be influenced by the permanent magnet (28) of the rotor is provided in a chamber wall facing the rotor (27) of the DC motor.

9. A small vehicle according to any one of claims 1 to 8, characterised in that the controller (60) for the electronic drive is subdivided into a master processor (61) disposed on the frame and into a subordinate motor processor (69, 70) for each drive motor (65, 66), wherein the motor processors (69, 70) are at least partly housed in the wheel hubs (10) near the motor.

10. A small vehicle according to any one of claims 1 to 9, characterised in that an electromagnetic spring pressure brake (parts 72-75) is concentrically disposed in the hub between the chamber (19') for the triggering electronics component (22') and the running wheel (27').

## Revendications

1. Véhicule de faible encombrement, en particulier chaise roulante, avec un cadre avec au moins deux roues de roulement qui sont actionnables chacune au moyen d'un moteur à courant continu avec engrenage disposé dans la zone de leur moyeu, caractérisé en ce que les roues de roulement sont formées comme des roues amovibles, munies d'un arbre de roue (13) pouvant être ancré amovible sur le cadre, en ce que chaque moteur à courant continu (65, 66) est disposé y compris son engrenage (38 et suite) sans porte-à-faux à l'intérieur du moyeu de roue actionnable (10) et en ce que le stator (23-25) de chaque moteur à courant continu est ancrable amovible sur le cadre (douille d'accouplement 32), en particulier un cadre de chaise roulante pliable, par l'intermédiaire d'une pièce de soutien (30).

2. Véhicule de faible encombrement selon la revendication 1, caractérisé en ce qu'un accouplement (45/46) actionnable par l'utilisateur du véhicule est disposé entre l'engrenage des moteurs de moyeu (65, 66) et le moyeu (10).

3. Véhicule de faible encombrement selon la revendication 1 ou 2, caractérisé en ce que l'alimentation électrique et la commande des deux moteurs de moyeu s'effectuent respectivement par l'intermédiaire d'un connecteur à fiches (31) amovible disposé sur la pièce de soutien (30) pour le stator de moteur pour les lignes électriques.

4. Véhicule de faible encombrement selon l'une des revendications 1 à 3, caractérisé en ce que les moteurs d'entraînement sont des moteurs à courant continu multipolaires, commutés électroniquement avec un rotor à aimant permanent (27) et les engrenages montés en aval sont formés comme des engrenages à roue planétaire.

5. Véhicule de faible encombrement selon l'une des revendications 1 à 4, caractérisé en ce que l'accouplement présente une roue dentée (45) reliée à un support de roue planétaire (37) de l'engrenage à roue planétaire, dans laquelle des entraîneurs (46) montés réglables dans le moyeu de roue (10) sont enclenchables, lesquels sont libérables au moyen d'un anneau de manoeuvre (51) monté sur le côté extérieur du moyeu, accessible à l'utilisateur du véhicule.

6. Véhicule de faible encombrement selon la revendication 5, caractérisé en ce que les entraîneurs (46) de l'accouplement sont formés comme des leviers pivotants à deux bras montés dans le moyeu de roue (10), qui présentent sur leur extrémité libre une saillie d'enclenchement (46.1) coopérant avec la roue dentée (45).

7. Véhicule de faible encombrement selon la revendication 5 ou 6, caractérisé en ce qu'un au moins des entraîneurs d'accouplement (46) agit dans une de ses positions de fonctionnement sur un contact à fusible électrique (56).

8. Véhicule de faible encombrement selon l'une des revendications 1 à 7, caractérisé en ce qu'une pièce électronique de commande (22) est logée dans une chambre fermable de tous côtés (carter 19) du stator du moteur à courant continu, un passage pour au moins une sonde de commande (55) influençable par les aimants permanents (28) du rotor étant prévu dans une paroi de chambre tournée vers le rotor (27) du moteur à courant continu.

9. Véhicule de faible encombrement selon l'une des revendications 1 à 8, caractérisé en ce que le dispositif de commande (60) pour l'entraînement électronique est divisé en un processeur maître (61) disposé sur le cadre et en un processeur esclave de moteur (69, 70) pour chaque moteur d'entraînement (65, 66), les processeurs de moteur (69, 70) étant logés au moins partiellement proches du moteur dans les moyeux de roue (10).

10. Véhicule de faible encombrement selon l'une des revendications 1 à 9, caractérisé en ce qu'un frein électromagnétique à effet de ressort (pièces 72-75) est disposé concentriquement dans le moyeu entre la chambre (19') pour la pièce électronique de commande (22') et le rotor (27').
